(19) Europäisches Patentamt
European Patent Office
Office européen des brevets

(11) Publication number: **0 214 324 B1**

(12) # EUROPEAN PATENT SPECIFICATION

(45) Date of publication of the patent specification: **07.03.90**

(51) Int. Cl.⁴: **C22B 3/00**, C22B 3/06, C22B 15/00

(21) Application number: **85111214.4**

(22) Date of filing: **05.09.85**

(54) **Method for separation and leaching of the valuable metals in metal sulphide materials.**

(43) Date of publication of application: **18.03.87 Bulletin 87/12**

(45) Publication of the grant of the patent: **07.03.90 Bulletin 90/10**

(84) Designated Contracting States: **AT DE FR GB SE**

(56) References cited:
**EP-A- 0 009 635**
**DE-C- 864 918**
**GB-A- 1 418 610**
**US-A- 2 352 096**
**US-A- 3 655 538**
**US-A- 3 880 653**
**US-A- 3 957 602**
**US-A- 4 094 754**
**US-A- 4 323 541**

(73) Proprietor: **CHEMINVEST A/S, Gronnehaven 10, N-4623 Kristiansand(NO)**

(72) Inventor: **Thomassen, Thomas, N-4760 Brekkesto(NO)**
Inventor: **Kostol, Carl-Otto, Auglandskollen 9, N-4620 Vagsbygd(NO)**

(74) Representative: **Barlow, Roy James et al, J.A.KEMP & CO. 14, South Square Gray's Inn, London WC1R 5EU(GB)**

EP 0 214 324 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention deals with a method for the separation of the valuable metals zinc, lead, nickel, cobalt and silver from copper and iron in complex metal sulphides which contain one or more of these valuable metals such as impure chalcopyrite concentrates. Further this invention is about a complete leaching of the copper, and at the same time an almost fully reduced cuprous chloride and ferrous chloride solution is produced, from which the copper is recovered by electrolysis. The iron is removed from the solution by oxidation using air in the presence of cuprous chloride applying well known methods.

The novelty of this invention resides in the first separation technique (the separation of zinc, lead, nickel, cobalt and silver from copper and iron), and the following leaching of copper in a simplified effective leach operation. This excludes such operations as solvent extraction (Elkem) for zinc, and the leach operation for copper needs only one stage for 100% leaching, compared to others which need 2 stages (Elkem) or only leach 50-60 % (Duval).

The separation and leaching is done by the cupric chloride/sulphate solution which is made by the oxidation of the solution coming from the copper electrolysis stage.

This cupric chloride/sulphate solution is separated into two parts-solution. One part goes to a metathesis stage where the copper in solution is exchanged with the zinc, the lead, the nickel, the cobalt and the silver in the fresh metal sulphide material which is added. The volume of cupric chloride/sulphate solution fed to the metathesis stage and that to the copper leach stage is between 1:1 and 1:100.

The part going to the metathesis stage is normally 1-2% of the main part.

These reactions only proceed by deliberately controlling the total chloride concentration in the solution to normally about 250 g/l, by injection of water or dilute filtrates to the metathesis stage, from washing operations of filter presses etc. The zinc, lead, nickel, cobalt and silver dissolve as the copper in the solution is precipitated as a sulphide.

The sulphur which the copper needs to make sulphides comes from the sulphur liberated when zinc, lead, nickel, cobalt and silver dissolve. It is important that at all times there is an excess of elemental sulphur ($S^{o}$) present for an effective precipitation of CuS. This can be done most easily by recycling some residue from the copper leach stage, a residue containing 70-80% elemental sulphur. The metals zinc, lead, nickel, cobalt and silver can be separated from the solution by a number of different methods. Here an ordinary hydroxide precipitation is chosen. The leaching of copper and some of the iron from the chalcopyrite is in great contrast to the metathesis. The solution used in the metathesis stage, containing some 250 g/l chlorides cannot be used in the leaching. One has to increase this intentionally to some 350 g/l for a complete leaching and reduction of the solution. The leaching can, of course, take place at lower chloride concentrations, but then a reduced solution is not obtained (Duval).

Duval only manages 50-60% leaching in their main leach stage and do the rest of the leaching in oxidation autoclave.

Elkem uses about 400 g/l chlorides and gets a very reduced leach solution of ferrous chloride with some cuprous chloride. They need two leach stages for a complete leaching and simultaneously produce an almost fully reduced leach solution. Elkem's ferric-chloride solution cannot be used for the metathesis reactions. In the present invention a new way has been found of combining known chemistry and chemical reactions, by intentionally separating the strong cupric chloride/sulphate solution from the oxidation/iron precipitation stage (containing some 350 g/l chlorides) into two part-solutions. The other part, and normally the largest part goes to the leach stage. Here the chloride concentration is kept preferably at about 350 g/l by regulating the evaporation of water in an amount equal to the volume of water in the wash water/thin filtrates added in the metathesis stage. Thus the reaction between the copper in the leach stage and the copper in the leach residue forming a copper sulphide is avoided, and an almost fully reduced solution is obtained.

Most of the known type of continuous reactors (stirred vessels) are concerned with what in terms may be called "shortening". This is a well documented phenomenon whereby fresh solution (here cupric chloride/sulphate solution) and concentrate (here chalcopyrite) travel right through the leach stage without reacting due to too effective mixing in the tanks.

"Shortening" is normally corrected by having more leach stages.

In the present invention as defined in the appended claims, however, a unique method has been found to solve this problem. The stirrer and the leach tank are designed such that the unreacted chalcopyrite sinks to the bottom of the leach tank while the leach residue floats on top. This is based on the differences in the specific gravities of the chalcopyrite and leach residue. The strong, oxidized cupric chloride solution is fed into the lower chalcopyrite bed. There, it continually reacts with fresh minerals before entering the upper bed.

This results in no "shortening" of solution and no unreacted chalcopyrite. The solution discharged from the overflow on the top of the tank is almost fully reduced.

The chloride concentration in the leach solution is maintained at the desired level (about 350 g/l) by additions of non-jarosite forming materials, like $MgCl_2$. The concentration of magnesium tends to vary from 85 g/l in the metathesis stage (due to dilutions) to about 110 g/l in the leach solution. The process solution in the leach stage is intentionally kept at about 100-150 g/l of sulphates, as it is expensive and complicated to remove the sulphates completely.

The residue from the copper leach stage can be deposited ad sulphur recovered if it is economically viable.

However, continued research has demonstrated that when treating very complex concentrates, where the zinc content is so large that zinc electrowinning should be used to recover the zinc, it is an advantage to treat the leach residue from the copper leach tank in the oxidation tank and at the same time use the chlorine gas produced by the zinc electrowinning (and from lead or other metals which produce chlorine gas by electrolysis) in the tank for a complete leaching of possible traces of metals that might be left in the residue. Such chlorine leaching is very straight forward, and normally done between 450-650 mV, preferably between 500-600 mV (SCE). This creates the advantage that into this tank other residues and solutions from purification operations can be added if desired, when concerned with the total ion balance of the process for better economy. This last leach tank is therefore acting as a dump where all things are added, chlorine leached and out comes a cupric chloride/sulphate solution containing varying amount of ferric chloride dependent on the variation in the excess of anions in the process. The iron is precipitated as a hydroxide and reports together with the sulphur residue. This residue can easily be stored.

This last chlorine leaching tank is a great advantage, especially when treating very intricate mineralogical complex concentrates.

The process can, of course, also be used on pure concentrates, and is therefore not limited to impure, complex concentrates.

Preferably the red/ox in the metathesis stage is between 100 and 400 mV (SCE).

Preferably the red/ox in the copper leach stage is between 200 and 400 mV (SCE).

Preferably the solution from the copper electrolysis stage is separated into two part-solutions, where one goes to the copper leach stage and the other goes to the oxidation leach stage in a ratio between 10:1 and 1:10.

Preferably the sulphate content of the cupric chloride/sulphate solution is between 50 and 200 g/l.

Preferably the temperature in the metathesis stage is between 90 and 150°C.

It is within the scope of this invention to use purification systems of different kinds in combination or separately. This includes as an example for the non-copper metals, precipitation as hydroxides, solvent extraction and cementation. The choice of which residues or solutions are returned to the chlorine leach stage may also be done singularly or in combinations.

The process is further explained on the simplified flowsheet below (fig. 1), and the special operation of the leach tank for the copper leaching is illustrated in fig. 2.

On the simplified flowsheet in fig. 1 (41) is the part-solution of cupric chloride/sulphate going to the copper leach stage (26), as the other part-solution (42) goes to the metathesis stage (3) where fresh metal sulphide containing material (1), leach residue (43) and water/thin filtrates (2) and returned anolyte (19) is also fed. After the reaction solid and solution are separated in (4). The residue (44) goes to the copper leach stage (26) while the solution goes to an oxidation stage (5) where chlorine gas (24) is used as an oxidant. After the oxidation the solution goes to an extraction system (6) where preferably about 90% of the total content of ferric chloride in the solution is removed by the use of an organic reagent (21).

The organic reagent is stripped in (7) using anolyte (20), and a strip solution (22) is fed to the chlorine leach tank (36). The solution from the extraction goes to (8) where preferably lime is added (9) to make ferric hydroxide from the remaining ferric chloride in the solution. The hydroxide precipitate (11) is separated from the solution in (10) and the solution goes to a cementation (12) where metallic zinc (13) is added. The cemented copper (15) is separated from the solution in (14). The purified solution goes to the electrolysis stage (16) where zinc (17) is obtained. Chlorine gas (23) which is formed is separated into two part streams (24) and (25), where (24) is returned to the oxidation of the metathesis filtrate in (5), as (25) goes to the chlorine leach stage (36). The anolyte (18) is also separated into two part-solutions (19) and (20), where (19) is returned to the metathesis stage (3) as the other (20) goes to the strip stage (7).

The residue (44) from the metathesis stage goes to the copper leach stage (26) where also the part-solution of cupric chloride/sulphate (41) and the anolyte (34) is fed.

The evaporaton from this stage is (27). After reaction, the residue (43) is recycled to the metathesis stage as part-residue and the solution are separated in (28). The residue is split into two part-residues (43) and (45) where part-residue (43) is recycled to the metathesis stage as part-residue (45) goes to the chlorine leach stage (36).

The solution goes to a purification stage (29) where metallic iron and sodium sulphide is added (30). The residue formed (46) is separated from the solution in (31) and the purified electrolyte goes to the copper electrolysis stage (32) where copper is produced (33). The anolyte from the copper electrolysis stage (34) is returned to the copper leach stage (26), as the catholyte (35) goes to the chlorine leach stage (36). The chlorine leach stage (36) receives residue (45) from the copper leach stage (26) and (28) together with catholyte (35), strip solution (22) and chlorine gas (25). The evaporation from this stage is (37).

After completed reactions in the chlorine leach stage (36) the residue (39) and the solution (40) is separated in (38). The residue (39) is stored as the solution (40) is returned to the process by separating it into two part-solutions (41) and (42), and the process starts all over again.

Fig. 2 shows a leach tank operation. The concentrate from the metathesis stage (1) (in fig. 1 shown as No. 44) is added to the leach tank (2), here shown as an open tank. The stirring is effected using an impeller/propeller type mixer (3) and (5) which stirs the contents in the tank in such a manner that two phases occur. The upper phase (7) contains to a large extent the leach residue (in fig. 1 named as No. 43) which contains 70–80% elementary sulphur. This residue together with the reduced solution is emptied in (8), as the residue (1) remains (sinks) in the lower phase (4) where it is leached by the fresh, cupric chloride/sulphate solution (6) (in fig. 1 marked as No. 41), without reaching the outlet (8).

Exampe 1

A chalcopyrite concentrate containing:

| Cu | Zn | Fe | S | Pb | Ag |
|---|---|---|---|---|---|
| 28.1 | 1.0 | 32.9 | 33.0 | 0.12 | 0.10 wt % |

was added to a continuously operating stirred leach tank with vigorous stirring together with a concentrated magnesium chloride solution. This solution simulated the recycled filtrate from an ordinary hydroxide precipitation. The chalcopyrite was 97% – 325 mesh (Tylor) grain size and it was added by vibration feeder. A strong cupric chloride/sulphate solution was added to obtain the desired level of red/ox in the reaction tank. The pump used was controlled by a red/ox control unit which caused the volume of the strong solution to vary in accordance with the desired red/ox in the filtrate from the leach tank. The temperature was all the time 100–102°C. All variables were constant, except the red/ox value which was varied from about 200 mV (SCE) and up towards 400 mV (SCE) to show at which red/ox value the metathesis ended and when the ordinary leaching started.

Table 1 below shows the results.

Table 1 – Results

| | |
|---|---|
| Feeding of chalcopyrite | = 10.0 kg/hr |
| Feeding of $MgCl_2$-solution | = 10.0 l/hr |
| Feeding of $CuCl_2/SO_4$-solution | = 0.3-25 l/hr |
| Volume leach tank (effective) | = 50.0 litres |
| Temperature | = 1.5-5 hours |
| Retention time | (average 3.5-4.5 hrs) |

Filtrate analysis:

| Red/ox (SCE) | Volume Filtrate 1/hr | g/l Cu | Fe | Zn | mg/l Pb | Ag | g/l Cl | $SO_4$ |
|---|---|---|---|---|---|---|---|---|
| 250 | 10.3 | 1.5 | 0.3 | 1.4 | 580 | 95 | 263 | 128 |
| 290 | 11.1 | 6.0 | 1.4 | 3.2 | 970 | 145 | 263 | 128 |
| 310 | 12.5 | 10.0 | 2.6 | 7.2 | 940 | 270 | 263 | 128 |
| 330 | 13.4 | 17.0 | 3.7 | 7.3 | 880 | 560 | 263 | 128 |
| 350 | 15.9 | 32.0 | 6.2 | 6.2 | 740 | 590 | 264 | 129 |
| 380 | 34.9 | 82.0 | 11.0 | 2.8 | 340 | 280 | 264 | 129 |

Residue analysis:

| Red/ox (SCE) | Weight g/hr | Wt% Cu | Fe | Zn | Pb | Ag | S | S° |
|---|---|---|---|---|---|---|---|---|
| 250 | 9980 | 28.2 | 32.9 | 0.86 | 0.06 | 0.09 | 33 | <0.1 |
| 290 | 9950 | 28.4 | 32.9 | 0.65 | 0.01 | 0.08 | 33 | <0.1 |
| 310 | 9920 | 29.0 | 32.8 | 0.10 | <0.01 | 0.07 | 33 | <0.1 |
| 330 | 9880 | 28.9 | 32.8 | 0.02 | – | 0.03 | 33 | 0.1 |
| 350 | 9740 | 28.5 | 32.7 | 0.02 | – | <0.01 | 34 | 0.8 |
| 380 | 8610 | 22.5 | 33.6 | 0.02 | – | – | 38 | 7.7 |

Starting solution analysis:

| | g/l $Cu^{++}$ | Mg | $Cl^-$ | $SO_4^{--}$ |
|---|---|---|---|---|
| $CuCl_2/SO_4$ -solution | 80 | 90 | 263 | 128 |
| $MgCl_2$ -solution | 0 | 120 | 265 | 129 |

Conclusions:

The test shows that at chloride concentrations of 263 g/l and at a red/ox potential of 310 mV (SCE) metathesis ends, producing a secondary precipitate of CuS, and ordinary leaching starts. This is indicated by the excess of elementary Sulphur (S°) in the residue. At the same time the percentage Cu in the residue is at a maximum at 310 mV.

The main reaction happening in the metathesis is:

$$Cu^{++} + ZnS \rightleftarrows Zn^{++} + CuS$$

and in the leaching:

$$Cu^{++} + CuS \rightleftarrows 2\ Cu^{+} + S^{o}$$

Example 2

This test was done in a concentrated chloride solution having 352 g/l chlorides, to demonstrate the fact that at such high chloride concentrations there is no metathesis to give rise to secondary precipitation of copper in accordance with the formula:

$$2\ Cu^{+} + S^{o} \rightleftarrows CuS + Cu^{++}$$

The test method was the same as the one mentioned in test No. 1.
The concentrate used was the one which was made in test No. 1 at 310 mV.

| | |
|---|---|
| Feeding of concentrate | =3000 g/hr |
| Feeding of strong $MgCl_2$ -solution | = 10 l/hr |
| Feeding of strong $CuCl_2/SO_4$ -solution | = 0.6-36 l/hr |
| Volume reaction tank (effective) | = 50 litre |
| Temperature | = 102°C |
| Retention time | 1.5-5 hrs |

Filtrate analysis:

| Red/ox (SCE) | Volume filtrate 1/hr | g/l Cu | Fe | $Cl^-$ | $SO_4^{--}$ |
|---|---|---|---|---|---|
| 250 | 11.7 | 15 | 3.3 | 351 | 128 |
| 290 | 22.2 | 58 | 13 | 352 | 128 |
| 310 | 35.0 | 76 | 17 | 352 | 129 |
| 330 | 44.5 | 81 | 19 | 352 | 129 |
| 350 | 46.0 | 81 | 19 | 352 | 129 |

Residue analysis:

| Red/ox (SCE) | Weight g/hr | wt% Cu | Fe | S | S° |
|---|---|---|---|---|---|
| 250 | 2920 | 28.4 | 32.4 | 34 | 1.2 |
| 290 | 2400 | 23.3 | 28.7 | 42 | 13 |
| 310 | 1760 | 12.5 | 22.4 | 57 | 37 |
| 330 | 1310 | 1.6 | 11.3 | 76 | 68 |
| 350 | 1250 | 1.0 | 7.8 | 79 | 74 |

Start solution analysis:

| | g/l $Cu^{++}$ | Mg | $Cl^-$ | $SO_4^{--}$ |
|---|---|---|---|---|
| $CuCl_2/SO_4$ -solution | 80 | 120 | 352 | 128 |
| $MgCl_2$ -solution | 0 | 150 | 351 | 129 |

Conclusions:

The test shows that leaching was complete at about 330 mV and that no precipitation of CuS occurred at chloride concentrations of 352 g/l, indicated by the fact that elementary sulphur (S°) was in excess all the time.

Example 3

When test No. 1 and No. 2 had shown that the chloride concentration was important for the metathesis reactions and the leach reactions and that the red/ox should be about 300–330 mV (SCE) for both operations, this test was designed to find the limits for the metathesis and the leaching reactions with respect to the chloride concentrations. This test was undertaken as in test 2 above using the residue from the test No. 1 (310 mV).

Elementary sulphur was added to 5%.

| | |
|---|---|
| Feeding of concentrate | = 1200 g/hr |
| Volume filtrate | = 18.0 l/hr |
| Temperature | = 100°C |
| Retention time | = 3 hrs |
| Red/ox | = 330 mV (SCE) |

Filtrate analysis:

| Chlorides | Net gain of Cu in the filtrate (g/l) | | | |
|---|---|---|---|---|
| g/l | Cu | $Cu^{++}$ | $Cu^{+}$ | %Cu leached |
| 204 | 6 | 6 | 0 | 7 |
| 248 | 8 | 8 | 0 | 9 |
| 285 | 30 | 15 | 15 | 34 |
| 322 | 61 | 15 | 46 | 70 |
| 346 | 81 | 12 | 69 | 93 |
| 370 | 82 | 10 | 72 | 94 |

<u>Conclusions:</u>

Test 3 shows that almost no leaching of copper occurs at chloride concentrations less than 248 g/l in the process solution (i.e. full metathesis) is almost all the copper is leached at chloride concentrations higher than 346 g/l. Between these limits (at 310 mV), there is a more shaded zone where metathesis does happen, but to a limited extent.

<u>Example 4</u>

This test was performed on such a leach operation as mentioned in test 3 above, except in this test a special reactor was used and the stirring varied with respect to the separation of the "phases" of chalcopyrite and leach residue containing 70-80 % elementary sulphur, thus avoiding the "shortening". This was not considered in the previous tests. The added energy to the solution (the slurry) in the leach tank was measured directly on the current which the stirring motor was using, and calculated from this.

Feeding of concentrate = 1200 g/hr
Chloride concentration = 350 g/l
Filtrate volume = 18 l/hr

Filtrate analysis:

| Red/ox (SCE) | Added energy $Hk/m^3$ soln. | g/l Cu | $Cu^{++}$ | $Fe^{++}$ |
|---|---|---|---|---|
| 308 | 0.1 | 84 | 4 | 20 |
| 310 | 0.2 | 83 | 4 | 20 |
| 313 | 0.4 | 84 | 5 | 20 |
| 320 | 0.6 | 83 | 10 | 20 |
| 326 | 0.8 | 83 | 16 | 19 |
| 330 | 1.0 | 82 | 23 | 19 |

Residue analysis:

| Added energy $Hk/m^3$ solution | wt% Cu | Fe | S | S° |
|---|---|---|---|---|
| 0.1 | 1.0 | 7.2 | 80 | 75 |
| 0.2 | 1.0 | 7.9 | 79 | 74 |
| 0.4 | 1.2 | 9.4 | 78 | 72 |
| 0.6 | 2.6 | 11.1 | 75 | 67 |
| 0.8 | 3.1 | 14.3 | 72 | 62 |
| 1.0 | 5.8 | 16.8 | 67 | 55 |

Conclusions:

The test shows that the reactor used here had a shortening energy of larger than 0.4 $Hk/m^3$ solution. This shortening energy will, of course, vary from design to design, but the principle will be the same and be within the intentions of this invention. Further a well reduced solution and a good leaching was obtained.

Example 5

A complex zinc/copper/lead concentrate being >97% -325 mesh grain size was leached in three batch tests in accordance with this invention. The three different leach stages - the metathesis stage, the copper leach stage and the oxidation leach stage was simulated by using a weaker cupric chloride/sulphate solution having 265 g/l chlorides for the metathesis and a stronger cupric chloride/sulphate solution having 350 g/l chlorides for the two other leaches. The chloride concentration was varied using different additions of magnesium chloride. The leaches were done at 102–110°C for 4 hours in a 10 litre stirred vessel for the metathesis and in a 30 litre stirred vessel for the two other leaches.

Once the reactions had gone to completion, the slurry was filtered and the solution and residue analysed.

– In the metathesis (leach No. 1) the fresh material was added to the weaker $CuCl_2/SO_4$-solution. Once all reaction was over, the slurry was filtered and the residue and solution analysed.
– In the copper leach (leach No. 2) the residue from the metathesis was added to the stronger $CuCl_2/SO_4$-solution. At the end of the reaction, the slurry was filtered and the residue and solution analysed.
– In the oxidation leaching (leach No. 3) the residue from the copper leach was chlorine gas leached in the stronger $CuCl_2/SO_4$-solution. At the end of reaction, the slurry was filtered and the residue and solution analysed.

Results
1. Solutions

| Filtrate | Vol | $Cu^{++}$ | $Cu^{+}$ | $Fe^{3+}$ | $Fe^{2+}$ | Zn | Pb | Mg | $Cl^{-}$ | HCL | $SO_4^{--}$ |
|---|---|---|---|---|---|---|---|---|---|---|---|
| No. 1 | 4.5 | 0 | 0.1 | 0 | 22 | 47 | 3.1 | 90 | 265 | 5 | 122 |
| No. 2 | 15.0 | 4 | 74 | 0 | 3,5 | 1.4 | 0.8 | 130 | 350 | 4 | 122 |
| No. 3 | 20.0 | 55 | 0 | 2.1 | 0 | < 0.1 | <0.1 | 130 | 360 | 3 | 122 |
| Start soln. | 1 | 80 | 0 | 0 | 0 | 0 | 0 | 90 | 265 | 0 | 120 |
| Start soln. | 2,3 | 50 | 0 | 0 | 0 | 0 | 0 | 130 | 350 | 0 | 120 |

2. Residues

| | % Cu | Fe | Zn | Pb | S | Weight (g) |
|---|---|---|---|---|---|---|
| Concentrate | 15.3 | 24.0 | 23.3 | 2.8 | 33.3 | 1000 |
| Residue No. 1 | 49 | 14 | 2.2 | 1.4 | 32 | 1030 |
| Residue No. 2 | 19 | 14 | 0.4 | 0.5 | 63 | 510 |
| Residue No. 3 | 0.6 | 7.5 | <0.1 | <0.1 | 85 | 380 |

Conclusions.

This example clearly shows the necessity of the third chlorine gas leach stage incorporated into the process in order to obtain a good leaching of the valuable metals when strongly complex (impure) concentrates are treated. At the same time the solutions were of satisfactory character for further treatment by the process.

Example 6

This test was done on the same concentrate as the one used in example 5, except that in this test the metathesis (leach No. 1) was done in an autoclave at 140-142°C. After 2 hours reaction time, the slurry was cooled, filtered and the residue analysed.

Results.
Residue analysis.

| Elements | Start conc. | Residue |
|---|---|---|
| Cu | 15.3% | 58 % |
| Fe | 24.0% | 2.4% |
| Zn | 23.3% | 1.6% |
| Pb | 2.8% | 0.5% |
| S | 33.3% | 32 % |
| Ni | 1200 ppm | 60 ppm |
| Co | 300 ppm | 90 ppm |
| Ag | 520 ppm | 300 ppm |
| As | 120 ppm | 6 ppm |
| Mo | 12 ppm | 2 ppm |
| Te | 10 ppm | 10 ppm |
| Se | 15 ppm | 15 ppm |
| Bi | 22 ppm | 2 ppm |
| Weight (g) | 1000 | 1020 |

This example shows that a higher reaction temperature makes a cleaner metathesis residue in a shorter time when compared to example 5. This is especially show w.r.t. iron in the residue. At the same time the trace elements are well leached except selenium and tellurium. The silver is partly leached.

Conclusions.

An increase in the reaction temperature in the metathesis stage from 105-110°C to 140-142°C increases the reaction rate and a cleaner metathesis is produced in a shorter time. The principle, however, concerning this invention is not changed by increasing the reaction temperature.

## Claims

1. A method of leaching and separating the valuable metals from (complex) sulphidic materials containing one or more sulphides of the metals copper, iron, zinc, lead, nickel, cobalt and silver, by treating said materials with an essentially cupric chloride/sulphate solution, said treatment comprising a first leaching stage (metathesis stage (3)) in which the valuable metals zinc, lead, nickel, cobalt and silver are dissolved and separated from copper and iron, and a subsequent copper leach stage (26) for the essentially complete leaching of copper, and where the obtained cuprous solution after recovery of the valuable metals is oxidised to cupric chloride/sulphate with a precipitation of dissolved iron to an iron residue and where the regenerated solution is reused in the process, characterized in that the regenerated cupric chloride/sulphate solution (40) is separated into two part-solutions (41) and (42) where one part-solution (42) is added to a metathesis reaction stage (3) where leach residue (43) from the copper leach stage (26), which contains elementary sulphur and fresh metal sulphide material (1), is also added under controlled red/ox conditions such that a permanent presence of an excess of elemental sulphur is maintained, together with the chloride content of the solution in that stage is controlled by additions of dilute filtrates/water (2) and return anolyte (19) from the valuable metal electrolysis (16) so that its concentration is maintained at between 200 and 300 g/l, whereby the valuable metals zinc, lead, nickel, cobalt and silver are dissolved and recovered from the solution by electrolysis, as copper and iron remain undissolved and form a residue together with the copper which was in the part-solution of cupric chloride/sulphate which is precipitated as a sulphide by using the liberated sulphur from the dissolution of zinc, lead, nickel, cobalt and silver together with the sulphur existing in the recycled residue (43) from the copper leach stage (26), as the other part-solution of cupric chloride/sulphate (41) is added to a copper leach stage (26) together with the total residue (44) from the metathesis stage (3) and anolyte (34) from the copper electrolysis stage (32) under controlled red/ox conditions and stirring energy supplied to the solution in that copper leach stage (26), together with the chloride content of the solution in the stage being controlled by the evaporation of water so that its concentration is maintained at between 300 and 400 g/l, whereby the residue from the metathesis stage (44) is almost fully leached and at the same time an almost all cuprous chloride/sulphate-ferrous iron chloride/sulphate solution is produced which goes to a copper electrolysis stage (32) which removes the copper metal (33) and where the solution from this stage is split into two part-solutions (34) and (35), where one part-solution (34) is returned to the copper leach stage (26), and the other (35) goes to an oxidation leach stage (36), where also the leach residue (45) form the copper leach stage (26) is added together with residues and eluates from purification stages of electrolytes together with catholyte (35) and chlorine gas (25) from the electrolysis of the metals zinc, lead, nickel, cobalt and silver, under controlled red/ox conditions (16) so that the remaining valuable metals in the leach residue from the copper leach stage (26) is completely leached and the dissolved iron in the solution entering this stage is precipitated as a residue (39) and reports together with the leach residue from this stage, as the oxidized solution (40) which contains almost entirely cupric chloride/sulphate is recycled to the process.

2. A method as described in claim 1, characterized in that the stirring energy supplied to the stirrer in the copper leach tank is such, to form a 2-phase system comprising a top and a bottom phase wherein the top phase contains copper leach residue (45) having accessibility to an overflow pipe through which it discharges along with solution (41) and the bottom phase contains complex metal sulphidic material (1).

3. A method as described in claim 1, characterized by the part-solution of cupric chloride/sulphate (41) which is fed to the copper leach stage (26) is fed under controlled red/ox conditions into that part of the stage where the fresh and heavier metal sulphide material (1) is present.

4. A method as described as claim 1, characterized by the ratio between the volume cupric chloride/sulphate solution fed to the metathesis stage (3) and to the copper leach stage (26) is between 1:1 and 1:100.

5. A method as described in claim 1, characterized by the red/ox in the metathesis stage (42) is between 100 and 400 mV (SCE).

6. A method as described in claim 1, characterized by the red/ox in the copper leach stage (26) is between 200 and 400 mV (SCE).

7. A method as described in claim 1, characterized by the red/ox in the oxidation leach stage (36) is between 450 and 650 mV (SCE).

8. A method as described in claim 1, characterized by an excess of elementary sulphur present in the metathesis reaction stage (3), obtained by recycling the necessary amounts of sulphur residue from the copper leach stage (26).

9. A method as described in claim 1, characterized by the solution out from the copper electrolysis stage (32) is separated into two part-solutions, where one (34) goes to the copper leach stage (26) and the other (35) goes to the oxidation leach stage (36), and that the ratio is between 10:1 and 1:10.

10. A method as described in claim 1, characterized by the sulphate content of the cupric chloride/sulphate solution is between 50 and 200 g/l.

11. A method as described in claim 1, characterized by the chloride concentrations being adjusted to keep cuprous chloride in solution by the addition of magnesium chloride.

12. A method as described in claim 1, characterized by the valuable metals in the solution form the metathesis stage (3) is such as zinc, lead, nickel, cobalt and silver in a mixture, in different mixtures or singular.

13. A method as described in claim 1, characterized by the temperature in the metathesis stage (3), is between 90 and 150°C.

## Patentansprüche

1. Ein Verfahren zum Auslaugen und Abtrennen wertvoller Metalle aus (komplexen) schwefelhaltigen Materialien, die ein oder mehrere Sulfide der Metalle Kupfer, Eisen, Zink, Blei, Nickel, Kobalt und Silber enthalten, durch Behandlung der genannten Materialien mit einer im wesentlichen Kupferchlorid/-sulfat-Lösung, wobei die Behandlung eine erste Auslaugstufe (Metathese-Stufe (3)), in der die wertvollen Metalle Zink, Blei, Nickel, Kobalt und Silber gelöst und von Kupfer und Eisen getrennt werden, und eine nachfolgende Kupfer-Auslaugstufe (26) für das im wesentlichen vollständige Auslaugen von Kupfer umfaßt, wobei die erhaltene Kupfer-Lösung nach der Rückgewinnung der wertvollen Metalle zu Kupferchlorid/-sulfat oxidiert wird mit einer Ausfällung von gelöstem Eisen zu einem Eisenrückstand und wobei die regenerierte Lösung in dem Prozeß wiederverwendet wird, dadurch gekennzeichnet, daß die regenerierte Kupferchlorid/-sulfat-Lösung (40) in zwei Teillösungen (41) und (42) aufgeteilt wird, wobei eine Teillösung (42) einer Metathese-Reaktionsstufe (3) zugegeben wird, wo Auslaugrückstand (43) der Kupfer-Auslaugstufe (26), der elementaren Schwefel enthält, und frischer Metall-Sulfid-Material (1) ebenfalls unter kontrollierten Redox-Bedingungen zugegeben werden, so daß ein ständiges Vorliegen eines Überschusses an elementarem Schwefel aufrechterhalten wird, wobei in dieser Stufe zugleich der Chlorid-Gehalt der Lösung durch Zugeben von verdünntem Filtrat/Wasser (2) und von von der Elektrolyse (16) der wertvollen Metalle zurückgeführtem Anolyt (19) so eingestellt wird, daß seine Konzentration zwischen 200 und 300 g/l gehalten wird, wodurch die wertvollen Metalle Zink, Blei, Nickel, Kobalt und Silber gelöst und aus der Lösung durch Elektrolyse zurückgewonnen werden, während Kupfer und Eisen ungelöst bleiben und zusammen mit dem Kupfer, das in der Kupferchlorid/-sulfat-Teillösung war, einen Rückstand bilden, der unter Verwendung des bei der Lösung des Zink, Blei, Nickel, Kobalt und Silber freigewordenen Schwefels und des Schwefels, der in dem aus der Kupfer-Auslaugstufe (26) rückgeführten Rückstand (43) vorliegt, als Sulfid ausgefällt wird, während die andere Kupferchlorid/-sulfat-Teillösung (41) zusammen mit dem gesamten Rückstand (44) der Metathese-Stufe (3) und Anolyt (34) aus der Kupfer-Elektrolysestufe (32) einer Kupfer-Auslaugstufe (26) unter kontrollierten Redox-Bedingungen zugegeben, der Lösung in der Kupfer-Auslaugstufe (26) Rührenergie zugeführt und zugleich der Chlorid-Gehalt der Lösung in der Stufe durch die Verdampfung von Wasser so gesteuert wird, daß seine Konzentration zwischen 300 und 400 g/l aufrechterhalten wird, wodurch der Rückstand der Metathese-Stufe (44) nahezu vollständig ausgelaugt und gleichzeitig eine nahezu reine Kupferchlorid/-sulfat-Eisen(II)-chlorid-sulfat-Lösung hergestellt wird, die zu einer Kupfer-Elektrolysestufe (32) gelangt, die metallisches Kupfer (33) entzieht und wo die Lösung dieser Stufe in zwei Teillösungen (34) und (35) aufgeteilt wird, wobei eine Teillösung (34) zur Kupfer-Auslaugstufe (26) rückgeführt wird und die andere (35) einer Oxidations-Auslaugstufe (36) zufließt, wo ebenfalls der Auslaugrückstand (45) aus der Kupfer-Auslaugstufe (26) zusammen mit Rückständen und Eluaten aus Reinigungsstufen von Elektrolyten zusammen mit Katholyt (35) und Chlorgas (25) aus der Elektrolyse der Metalle Zink, Blei, Nickel, Kobalt und Silber unter kontrollierten Redox-Bedingungen (16) zugegeben wird, so daß die verbleibenden wertvollen Metalle in dem Auslaugrückstand aus der Kupfer-Auslaugstufe (26) vollständig ausgelaugt werden und das gelöste Eisen in der in diese Stufe eintretenden Lösung als ein Rückstand (39) ausgefällt und zusammen mit dem Auslaugrückstand aus dieser Stufe ausgetragen wird, während die oxidierte Lösung (40), die nahezu vollständig Kupferchlorid/-sulfat enthält, dem Prozeß wieder zugeführt wird.

2. Ein Verfahren gemäß Anspruch 1, dadurch gekennzeichnet, daß die den Rührer in dem Kupfer-Auslaugbehälter zugeführte Rührenergie derartig ist, daß ein Zweiphasensystem gebildet wird, welches eine obere und eine untere Phase umfaßt, wobei die obere Phase Kupferauslaugrückstände (45) enthält und Zugang hat zu einem Überlaufrohr, durch welches sie zusammen mit Lösung (41) abfließt, und die untere Phase komplexes Metall-Sulfit-Material (1) enthält.

3. Ein Verfahren gemäß Anspruch 1, dadurch gekennzeichnet, daß die Kupferchlorid/-sulfat-Teillösung (41), die der Kupferauslaugstufe (26) zugeführt wird, dem Teil der Stufe unter kontrollierten Redox-Bedingungen zugeführt wird, wo das frische und schwerere Metall-Sulfit-Material (1) vorliegt.

4. Ein Verfahren gemäß Anspruch 1, dadurch gekennzeichnet, daß das Volumen-Verhältnis der Kupferchlorid/-sulfat-Lösung, die der Metathese-Stufe (3) zugeführt wird, zu der, die der Kupferauslaugstufe (26) zugeführt wird, zwischen 1:1 und 1:100 liegt.

5. Ein Verfahren gemäß Anspruch 1, gekennzeichnet durch ein Redox-Potential in der Metathese-Stufe (42) zwischen 100 und 400 mV (SCE).

6. Ein Verfahren gemäß Anspruch 1, gekennzeichnet durch ein Redox-Potential in der Kupferauslaugstufe (26) zwischen 200 und 400 mV (SCE).

7. Ein Verfahren gemäß Anspruch 1, gekennzeichnet durch ein Redox-Potential in der Oxydations-Auslaugstufe (36) zwischen 450 und 650 mV (SCE).

8. Ein Verfahren gemäß Anspruch 1, dadurch gekennzeichnet, daß ein Überschuß an elementarem Schwefel in der Metathese-Reaktionsstufe (3) vorliegt, der durch die Rückführung der notwendigen Menge an Schwefelrückstand aus der Kupferauslaugstufe (26) erzielt wird.

9. Ein Verfahren gemäß Anspruch 1, dadurch gekennzeichnet, daß die Lösung aus der Kupferelektrolysestufe (32) in zwei Teillösungen aufgeteilt wird, von denen eine (34) der Kupferauslaugstufe (26) und die andere (35) der Oxidationsauslaugstufe (36) zugeführt wird, und daß das Verhältnis zwischen 10:1 und 1:10 liegt.

10. Ein Verfahren gemäß Anspruch 1, dadurch gekennzeichnet, daß der Sulfatgehalt in der Kupferchlorid/-sulfat-Lösung zwischen 50 und 200 g/l beträgt.

11. Ein Verfahren gemäß Anspruch 1, dadurch gekennzeichnet, daß die Chloridkonzentrationen durch die Zugabe von Magnesiumchlorid eingestellt werden, um Kupferchlorid in Lösung zu halten.

12. Ein Verfahren gemäß Anspruch 1, dadurch gekennzeichnet, daß die wertvollen Metalle in der Lösung aus der Metathese-Stufe (3) Metalle wie Zink, Blei, Nickel, Kobalt und Silber in einer Mischung, in verschiedenen Mischungen oder einzeln sind.

13. Ein Verfahren gemäß Anspruch 1, dadurch gekennzeichnet, daß die Temperatur in der Metathese-Stufe (3) zwischen 90° und 150°C liegt.

**Revendications**

1. Procédé de lixiviation et de séparation des métaux précieux à partir de matières (complexes) sulfurées contenant un ou plusieurs sulfures des métaux tels que le cuivre, le fer, le zinc, le plomb, le nickel, le cobalt et l'argent, en traitant lesdites matières avec une solution de chlorure/sulfate essentiellement de cuivre, ledit traitement comprenant une première étape de lixiviation (étape de méthathèse (3)) au cours de laquelle les métaux précieux – zinc, plomb, nickel, cobalt et argent – sont dissous et sont séparés du cuivre et du fer, et une étape ultérieure (26) de lixiviation du cuivre, et où la solution cuivreuse obtenue après récupération des métaux précieux est oxydée en chlorure/sulfate de cuivre, le fer dissous étant précipité en un résidu de fer, et où la solution régénérée est réutilisée dans le procédé, caractérisé en ce que la solution régénérée (40) de chlorure/sulfate de cuivre est séparée en deux solutions partielles (41) et (42), une première solution partielle (42) étant ajoutée dans une étape de réaction de métathèse (3) où les résidus de lixiviation (43) de l'étape du cuivre, qui contiennent du soufre élémentaire et de la matière sulfurée métallique neuve (1), sont également ajoutés dans des conditions d'oxydoréduction déterminées de façon qu'une présence permanente d'un excédent de soufre élémentaire soit maintenue, la teneur en chlorure de la solution étant également déterminée dans cette étape par des apports de filtrats dilués/eau (2) et d'anolyte (19) de retour produit par l'électrolyse (16) des métaux précieux de façon que sa concentration soit maintenue entre 200 et 300 g/l, grâce à quoi les métaux précieux – zinc, plomb, nickel, cobalt et argent – sont dissous et sont extraits de la solution par électrolyse, puisque le cuivre et le fer restent non dissous et forment des résidus avec le cuivre qui était présent dans la solution partielle de chlorure/sulfate de cuivre et qui est précité sous forme de sulfure en utilant le soufre libéré du fait de la dissolution du zinc, du plomb, du nickel, du cobalt et de l'argent conjointement avec le soufre existant dans les résidus recyclés (43) de l'étape (26) de lixiviation du cuivre, tandis que l'autre solution partielle (41) de chlorure/sulfate de cuivre est ajoutée, lors d'une étape (26) de lixiviation du cuivre, conjointement avec la totalité des résidus (44) de l'étape de méthathèse (3) et avec l'anolyte (3) produit par l'électrolyse (32) du cuivre dans des conditions d'oxydoréduction déterminées et une énergie d'agitation étant fournie à la solution lors de cette étape de lixiviation (26) du cuivre, la teneur en chlorure de la solution pendant cette étape étant réglée par l'évaporation d'eau de façon que sa concentration soit maintenue entre 300 et 400 g/l, grâce à quoi les résidus de l'étape de métathèse (44) sont presque entièrement lessivés et, en même temps, il est produit une solution presque entièrement composée de chlorure/sulfate cuivreux et de chlorure/sulfate de fer ferreux, qui va subir une étape d'électrolyse (32) de cuivre qui élimine le cuivre métal (33), et où la solution issue de cette étape est divisée en deux solutions partielles (34) et (35), où une première solution partielle (34) retourne à l'étape de lixiviation (26) du cuivre, et l'autre (35) va subir une étape de lixiviation oxydante, (36), où les résidus (45) de lixiviation issus de l'étape de lixiviation (26) du cuivre sont ajoutés avec les résidus et éluats provenant d'étapes d'épuration d'électrolytes le catholyte (35) et le chlore gazeux (25) provenant de l'électrolyse des métaux – zinc, plomb, nickel, cobalt et argent – dans des conditions d'oxydo-réduction déterminées (16) de façon que le reste de métaux précieux dans les résidus de lixiviation de l'étape (26) de lixiviation du cuivre soit complètement lessivé et que le fer dissous dans la solution parvenant à cette étape soit précipité sous forme de résidus (39) et se présente à partir de cette étape avec les résidus de lixiviation, à mesure que la solution oxydée (40) qui contient presque entièrement du chlorure/sulfate de cuivre est recyclée dans le procédé.

2. Procédé selon la revendication 1, caractérisé en ce que l'énergie d'agitation fournie à l'agitateur dans la cuve de lixiviation du cuivre a pour fonction de former un système à 2 phases comportant une phase supérieure et une phase inférieure, dans lesquelles la phase supérieure contient les résidus (45) de lixiviation du cuivre qui peuvent accéder à un tuyau de trop-plein par lequel ils sont refoulés avec la solution (41), et la phase inférieure contient une matière sulfurée métallique complexe (1).

3. Procédé selon la revendication 1, caractérisé en ce que la solution partielle de chlorure/sulfate de cuivre (41) introduite lors de l'étape (26) de lixiviation du cuivre est introduite dans des conditions d'oxydoréduction déterminées dans la partie de l'étape où est présente la matière sulfurée métallique neuve et plus lourde (1).

4. Procédé selon la revendication 1, caractérisé en ce que le rapport entre le volume de solution de chlorure/sulfate de cuivre introduite lors de l'étape de métathèse (3) et l'étape (26) de lixiviation du cuivre est compris entre 1/1 et 1/100.

5. Procédé selon la revendication 1, caractérisé en ce que le potential redox lors de l'étape de métathèse (42) est compris entre 100 et 400 mV (électrode saturée au calomel).

6. Procédé selon la revendication 1, caractérisé en ce que le potentiel redox lors de l'étape (26) de lixiviation du cuivre est compris entre 200 et 400 mV (électrode saturée au calomel).

7. Procédé selon la revendication 1, caractérisé en ce que le potentiel redox lors de l'étape (36) de lixiviation oxydante est compris entre 450 et 650 mV (électrode saturée au calomel).

8. Procédé selon la revendication 1, caractérisé par un excédent de soufre élémentaire présent dans l'étape (3) de réaction de métathèse, obtenu en recyclant les quantités nécessaires de résidus de soufre issus de l'étape (26) de lixiviation du cuivre.

9. Procédé selon la revendication 1, caractérisé en ce que la solution issue de l'étape (32) d'électrolyse du cuivre est séparée en deux solutions partielles, dont la première (34) est amenée à l'étape de lixiviation (26) du cuivre et l'autre (35) est amenée à l'étape de lixiviation oxydante (36), et en ce que le rapport est compris entre 10/1 et 1/10.

10. Procédé selon la revendication 1, caractérisé en ce que la teneur en sulfate de la solution de chlorure/sulfate de cuivre est comprise entre 50 et 200 mg/l.

11. Procédé selon la revendication 1, caractérisé en ce que les concentrations de chlorure sont réglées pour maintenir le chlorure de cuivre en solution par apport de chlorure magnésium.

12. Procédé selon la revendication 1, caractérisé en ce que les métaux précieux présents dans la solution issue de l'étape de métathèse (3) comprennent du zinc, du plomb, du nickel, du cobalt et de l'argent en un mélange, en différents mélanges ou seuls.

13. Procédé selon la revendication 1, caractérisé en ce que la température dans l'étape de métathèse (3) est comprise entre 90 et 150°C.

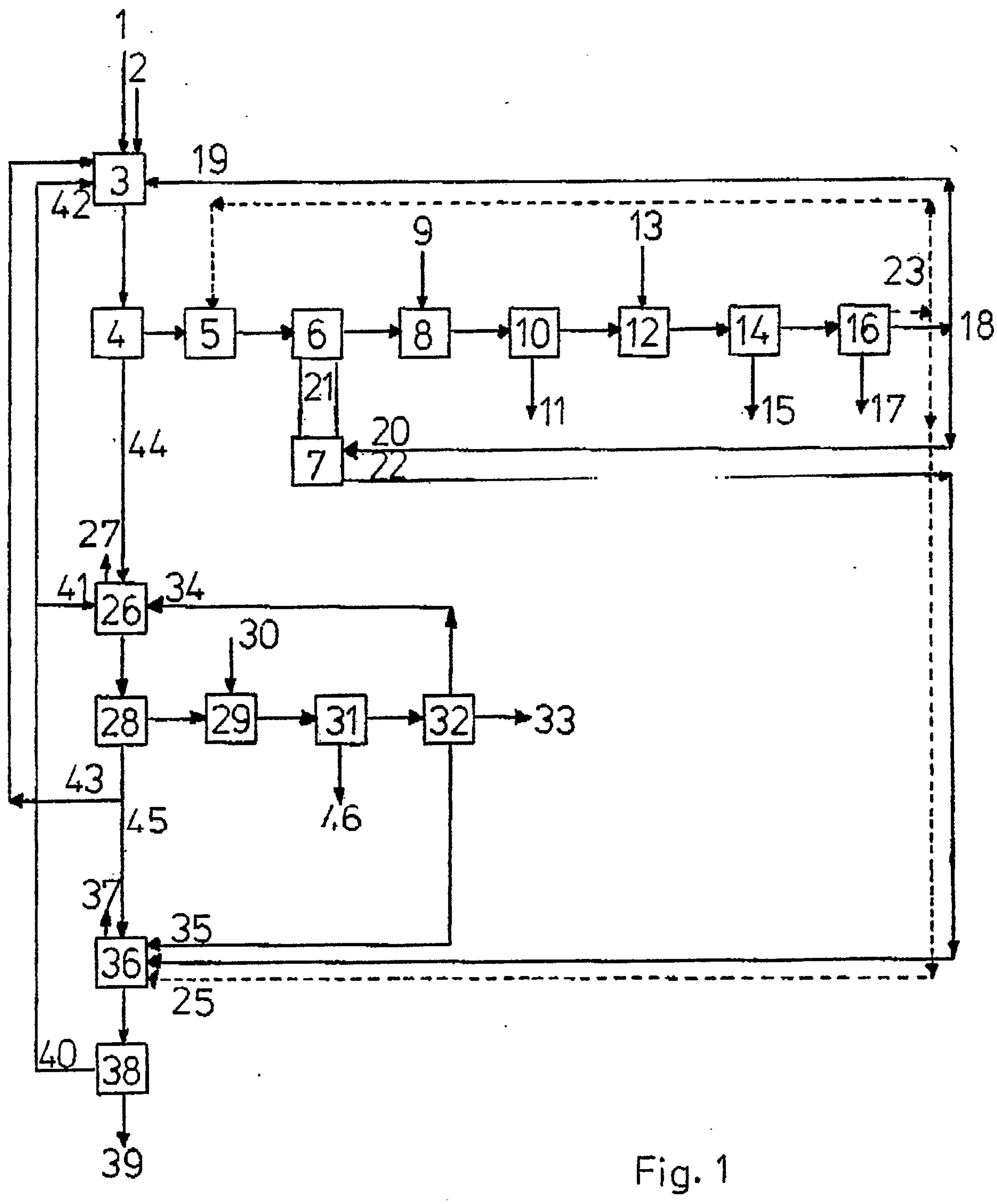
1
2
3
19
42
4
5
6
8
9
10
12
13
14
16
23
18
21
11
15
17
7
20
22
44
27
41
26
34
30
28
29
31
32
33
43
45
46
37
36
35
25
40
38
39

Fig. 1

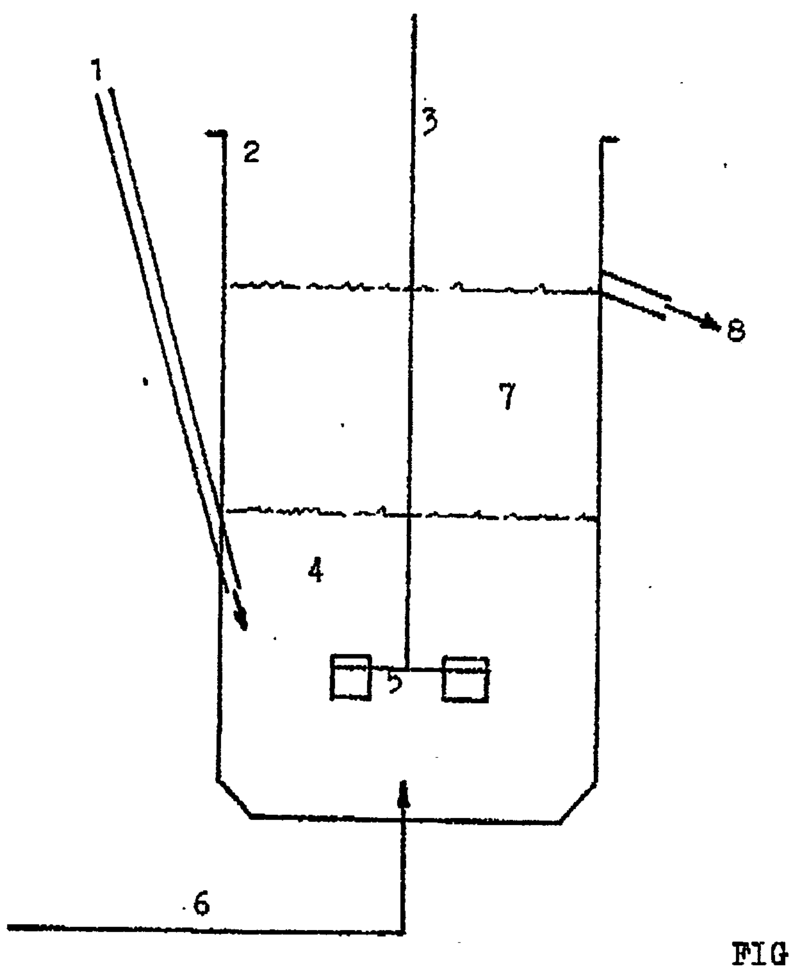


FIG 2.